# EUROPÄISCHE PATENTSCHRIFT

(11) **EP 3 679 265 B1**
(45) Veröffentlichungstag und Bekanntmachung des Hinweises auf die Patenterteilung: **27.10.2021**
(21) Anmeldenummer: 18766169.9
(22) Anmeldetag: 03.09.2018
(51) Int. Cl.: F16D 65/00

(54) **BREMSSTAUBPARTIKELFILTER SOWIE SCHEIBENBREMSENANORDNUNG MIT EINEM BREMSSTAUBPARTIKELFILTER**
BRAKE DUST PARTICLE FILTER AND DISC BRAKE ASSEMBLY COMPRISING A BRAKE DUST PARTICLE FILTER
FILTRE À PARTICULES DE POUSSIÈRE DE FREIN AINSI QUE SYSTÈME DE FREIN À DISQUE MUNI D'UN FILTRE À PARTICULES DE POUSSIÈRE DE FREIN

(30) Priorität: 08.09.2017 DE 102017008421
(43) Veröffentlichungstag der Anmeldung: 15.07.2020
(73) Patentinhaber: MANN+HUMMEL GmbH, 71636 Ludwigsburg (DE)
(72) Erfinder: BOCK, Lukas, 74321 Bietigheim-Bissingen (DE); JESSBERGER, Thomas, 71679 Asperg (DE); KÜMMERLING, Volker, 74321 Bietigheim-Bissingen (DE); ZBIRAL, Robert, 71672 Marbach (DE); EVLEKLI, Coskun, 71332 Waiblingen (DE)
(74) Vertreter: Mann + Hummel Intellectual Property
(86) Internationale Anmeldenummer: PCT/EP2018/073600
(87) Internationale Veröffentlichungsnummer: WO 2019/048374

(56) Entgegenhaltungen:
- EP-A1- 2 151 596
- DE-A1- 3 934 422
- DE-A1- 10 336 984
- DE-A1-102012 016 835
- DE-U1-202004 000 029
- US-A1- 2013 092 486

## Beschreibung

Die Erfindung betrifft einen Bremsstaubfilter für eine Scheibenbremsenanordnung mit einer Bremsscheibe und einem Bremssattel. Der Bremstaubpartikelfilter ist zum Auffangen von beim Bremsen entstehenden Partikeln ausgebildet. Die Erfindung betrifft weiterhin eine Schreibenbremsenanordnung mit einem solchen Bremsstaubpartikelfilter.

### Technisches Gebiet

Es ist bekannt, Partikel, die durch Bremsabrieb entstehen, mit einem Bremsstaubpartikelfilter aufzufangen und zu entsorgen. Derlei Partikel entstehen durch Reibung zwischen Bremsbelag und Bremsscheibe einer Scheibenbremse. Ein solcher Bremsstaubpartikelfilter ist beispielsweise aus DE 10 2012 016 835 A1 bekannt geworden. Dieser Bremsstaubpartikelfilter bedingt jedoch eine Integration in ein Bremssattelgehäuse und eignet sich daher nur bedingt als Nachrüstlösung.

### Offenbarung der Erfindung

Aufgabe der vorliegenden Erfindung ist es demgegenüber, einen Bremsstaubpartikelfilter bereit zu stellen, der sowohl effizienter zur Abscheidung von beim Bremsen anfallenden Partikeln ausgebildet ist als auch zur Nachrüstung bestehender Fahrzeuge geeignet ist. Aufgabe der vorliegenden Erfindung ist es weiterhin, eine Scheibenbremsenanordnung mit einem solchen Bremsstaubpartikelfilter bereit zu stellen.

Der erfindungsgemäße Bremsstaubpartikelfilter ist für beliebige Anwendungen von Scheibenbremsen geeignet, sowohl mobile als auch stationäre Anwendungen. Bei den mobilen Anwendungen kann dieser beispielsweise in PKW, LKW, Bussen, Schienenfahrzeugen eingesetzt werden. Stationär beispielsweise bei Wellenbremsen wie sie bei Windkraftanlagen eingesetzt werden.

Diese Aufgabe wird durch einen Bremsstaubpartikelfilter gemäß Patentanspruch 1 sowie eine Scheibenbremsenanordnung gemäß Patentanspruch 13 gelöst. Die abhängigen Ansprüche geben bevorzugte Weiterbildungen wieder.

Der Bremsstaubpartikelfilter weist ein ringsegmentförmiges, etwa bananenförmiges und/oder helmförmiges, Gehäuse auf. In dem Gehäuse wird in einem Montagezustand die Bremsscheibe einer Scheibenbremsenanordnung aufgenommen. Das Gehäuse weist zumindest zwei Gehäuseseitenwände und eine Gehäuseumfangswand auf. Die Gehäuseumfangswand verbindet im montierten Zustand des Bremsstaubpartikelfilters die beiden Gehäuseseitenwände mittelbar oder unmittelbar. Im Innenraum des Gehäuses, d.h. der Bremsscheibe zugewandt, weist der Bremsstaubpartikelfilter ein Filtermedium auf. Um die effektive Filterfläche des Filtermediums zu vergrößern, ist im Bremsstaubpartikelfilter eine Zunge vorgesehen, die das Filtermedium stützt. Die Zunge erstreckt sich erfindungsgemäß in einem Gehäuseinnenraum zumindest abschnittsweise mit zumindest einer Radialkomponente von der Gehäuseumfangswand weg. Die Zunge hat erfindungsgemäß eine flache Querschnittsform und weist eine der Gehäuseumfangswand zugewandte Grundfläche, eine in den Gehäuseinnenraum ragende Deckfläche sowie zumindest eine Seitenfläche auf. Unter flach wird hierin eine Querschnittsform verstanden, deren breite Seite viel größer ist als deren schmale Seite. Alternativ könnte eine solche Querschnittsform auch als platt oder länglich bezeichnet werden.

Die Zunge ist zumindest teilweise, nämlich zumindest auf ihrer Seitenfläche, vorzugsweise weitestgehend, besonders bevorzugt vollständig, mit dem Filtermedium bekleidet. Hierdurch wird eine höhere Filterwirkung als im Stand der Technik erreicht. Die Zunge erstreckt sich dabei bevorzugt von einem äußeren Umfang zu einen inneren Umfang, d.h. nach radial innen.

In einer bevorzugten Ausführungsform kann die Zunge einen im Wesentlichen rechteckförmigen Querschnitt haben, wobei ein Verhältnis einer breiten Seite zu einer schmalen Seite des rechteckförmigen Querschnitts zwischen 15 und 60, bevorzugt zwischen 20 und 40, liegt. Derartige Werte lassen sich für eine Vielzahl von Baugrößen des Bremsstaubpartikelfilters durch Einsatz von Blechen in Standardstärken zur Fertigung der zumindest einen Zunge realisieren; beispielsweise können Bleche mit einer Stärke (= schmale Seite des Querschnitts) zwischen 0,5 und 4 mm eingesetzt werden.

Es ist hierbei nicht zwingend, dass die Zunge einen zusammenhängenden, unterbrechungsfreien Körper bildet, vielmehr kann diese auch ein- oder mehrfach geschlitzt sein, wobei sich in der Regel auch bei einer geschlitzten Zunge eine hinreichende Stützungsfunktion für das Filtermedium ergibt. Bei derartigen geschlitzten Zungen beziehen sich o. g. Verhältnisangaben jeweils auf eine Außenkontur der jeweiligen Zunge und nicht auf die durch die Schlitzung gebildeten "Teilzungen". Die Zunge kann vorteilhafterweise aus einem Gittermaterial, bspw. einem Metallgitter, ausgebildet sein.

Besonders bevorzugt erstreckt sich die zumindest eine Zunge derart in dem Innenraum, dass deren Grundfläche in einem Montagezustand des Bremsstaubpartikelfilters parallel zu einer Drehachse der Bremsscheibe verläuft.

Die Zunge kann an einer Gehäusewand angeordnet oder ausgebildet sein, z. B. einteilig mit der Gehäusewand. Vorzugsweise ist die Zunge an der Gehäuseumfangswand angeordnet oder ausgebildet. Alternativ oder zusätzlich dazu kann der Bremsstaubpartikelfilter ein Filterelement aufweisen, wobei das Filterelement eine Filterelement-Stützstruktur aufweist, auf bzw. an der das Filtermedium angeordnet ist. Dabei kann die Filterelement-Stützstruktur die Zunge aufweisen. Beim Vorsehen eines Filterelements ist das Filtermedium besonders leicht und umweltfreundlich austauschbar, da bei einer Beladung des Filtermediums lediglich das Filterelement getauscht werden muss und nicht das komplette Gehäuse. Zur Aufnahme des Filterelements ist gemäß dieser Ausführungsform vorteilhaft ein Aufnahmebereich vorgesehen, in den das Filterelement eingesetzt werden kann. In dem Aufnahmebereich kann es beispielsweise durch Clipse oder andere geeignet erscheinende Befestigungselemente gehalten werden. Besonders vorteilhaft weist das Filterelement eine gebogene Form auf, insbesondere eine Kreisbogenform, die mit der Innenform bzw. dem Radius der Gehäuseumfangswand korrespondiert.

Das Filtermedium kann mittelbar oder unmittelbar an der Zunge, der Gehäusewand, insbesondere der Gehäuseumfangswand, und/oder an der Filterelement-Stützstruktur befestigt sein. Das Filtermedium kann eine Falte bilden, in die sich die Zunge zumindest teilweise erstreckt. Hierdurch ist der Bremsstaubpartikelfilter besonders einfach fertigbar.

Gemäß einer weiteren bevorzugten Ausführungsform ist zumindest eine weitere Zunge vorgesehen, die sich in den Gehäuseinnenraum von zumindest einer Gehäuseseitenwand erstreckt. Bevorzugt bilden die sich von der Gehäuseumfangswand erstreckende Zunge und die sich von der Gehäuseseitenwand erstreckende Zunge eine zusammenhängende Zunge, die eine L-förmige oder U-förmige Grundform aufweist. Hierdurch wird die effektive Zungenoberfläche stark erhöht, was zu einer nochmals verbesserten Abscheideleistung beiträgt. Ferner ist dadurch eine in Radialrichtung Platz sparende Bauweise möglich, da ein Teil der gesamten Zungenoberfläche auf die an der Gehäuseseitenwand vorliegende Zunge verteilt werden kann.

Die Zunge kann zumindest eine Durchgangsausnehmung aufweisen, die von dem Filtermedium bedeckt ist. Hierdurch ist das Filtermedium im Bereich der Zunge durchströmbar. Die Zunge kann vorteilhaft auch mehrere Durchgangsausnehmungen aufweisen, die jeweils von dem Filtermedium bedeckt sind.

In weiter bevorzugter Ausgestaltung der Erfindung ist das Filtermedium im Bereich der Zunge in Form einer Sammeltasche bzw. Auffangtasche für Partikel ausgebildet, wobei die Auffangtasche nach unten hin geschlossen ist, so dass Partikel aufgrund der auf sie wirkenden Schwerkraft nicht aus der Auffangtasche fallen können. Der Bremsstaubpartikelfilter kann hierdurch große Partikelmengen zurückhalten. Dem Filtermedium kann die Form der Sammel- bzw. Auffangtasche vorteilhaft durch die zumindest eine Zunge aufgeprägt werden, die eine ebensolche Form aufweisen kann. Bevorzugt befindet sich ein tiefster Punkt der Tasche in Schwererichtung nach unten weisend.

In weiter bevorzugter Ausgestaltung des Bremsstaubpartikelfilters weist das Filtermedium zumindest eine erste Filterschicht mit einer Porosität und eine zweite Filterschicht mit einer größeren Porosität auf. Die beiden Filterschichten können in Form von Bereichen (in Dickenrichtung gesehen) des Filtermedium ausgebildet sein, so dass das Filtermedium einen Porositätsgradienten aufweist. Alternativ oder zusätzlich dazu kann ein weiteres Filtermedium auf dem Filtermedium vorgesehen sein, wobei sich die Porosität des weiteren Filtermediums vorzugsweise von der Porosität des Filtermediums unterscheidet. Durch diese Anordnung bzw. Ausbildung unterschiedlicher Filterschichten kann der Abscheidungsgrad des Bremsstaubpartikelfilters genau an die jeweilige Anwendung angepasst werden. Vorteilhaft nimmt die Porengröße dabei von radial innen nach radial außen ab.

Der Bremsstaubpartikelfilter kann zusätzlich zu der zuvor beschriebenen Zunge zumindest eine weitere Zunge im Gehäuseinnenraum aufweisen. Mit anderen Worten weist der Bremsstaubpartikelfilter vorzugsweise eine Mehrzahl von im Gehäuseinnenraum nach innen ragenden Zungen auf, die vorzugsweise in Umfangsrichtung beabstandet angeordnet sind. Die Zungen stützen das Filtermedium und sindzumindest teilweise, insbesondere vollständig, mit dem Filtermedium bedeckt. Durch die Anordnung bzw. Ausbildung mehrerer Zungen wird die Filterwirkung weiter signifikant erhöht. Zumindest zwei Zungen können dabei einen jeweils unterschiedlichen Winkel zur Gehäuseumfangswand einnehmen. Unter Winkel zur Gehäuseumfangswand wird hierbei ein Winkel zwischen einer in einem gedachten Kontaktpunkt der Zunge mit der Gehäuseumfangswand angelegten Tangente und der Längserstreckung der Zunge verstanden.

Der Bremsstaubpartikelfilter ist vorzugsweise so ausgebildet, dass die filternde Wirkung in Umfangsrichtung des Gehäuses zunimmt. Die Zunahme erfolgt dabei bevorzugt von einem Anlagebereich des Gehäuses weg, wobei der Anlagebereich zur Anlage am Bremssattel der Scheibenbremsenanordnung vorgesehen ist. Mit anderen Worten ist der Bremsstaubpartikelfilter vorzugsweise so ausgebildet, dass die Filterwirkung mit zunehmendem Abstand vom Bremssattel bzw. von dem Anlagebereich zur Anlage am Bremssattel, zunimmt. Unter einer besseren Filterwirkung wird hierin beispielsweise die Abscheidbarkeit feinerer Partikelfraktionen verstanden. Dies erfolgt insbesondere durch eine oder mehrere folgender Maßnahmen:
- Die Porosität des Filtermediums nimmt in Umfangsrichtung des Gehäuses ab. Insbesondere weist das Filtermedium an einer Zunge eine größere Porosität auf als das Filtermedium an der nächsten benachbarten Zunge, die sich weiter weg vom Anlagebereich des Bremsstaubpartikelfilters befindet.

- Die Dicke des Filtermediums nimmt in Umfangsrichtung des Gehäuses zu.
- Eine Zunge schließt einen kleineren Winkel mit der Gehäuseumfangswand ein als eine benachbarte Zunge, die sich weiter weg vom Anlagebereich befindet.
- Eine Zunge weist mehr und/oder größere Durchgangsausnehmungen auf als eine benachbarte Zunge, die sich weiter vom Anlagebereich des Bremsstaubpartikelfilters entfernt befindet, wobei bevorzugt die Abmessungen der Durchgangsausnehmungen in Umfangsrichtung von dem Anlagebereich weg abnehmen.

- Eine Zunge weist mit ihrem freien Ende weniger weit in den Innenraum des Gehäuses als eine benachbarte Zunge, die sich weiter weg vom Anlagebereich des Bremsstaubpartikelfilters befindet.
- Die Fläche einer Zunge ist kleiner als die Fläche einer benachbarten Zunge, die sich weiter vom Anlagebereich des Bremsstaubpartikelfilters entfernt befindet.

Der Bremsstaubpartikelfilter kann zumindest eine Öffnung zum Austritt gefilterter Luft in der Gehäusewand, insbesondere in der Gehäuseumfangswand, aufweisen. Vorzugsweise weist der Bremsstaubpartikelfilter eine Mehrzahl an Öffnungen zum Austritt gefilterter Luft in der Gehäusewand, insbesondere in der Gehäuseumfangswand, auf.

Zumindest eine Öffnung ist vorzugsweise in einem Gehäuseendbereich vorgesehen, der - in Umfangsrichtung des Gehäuses betrachtet - im Bereich des Bremssattels ausgebildet ist. Der Gehäuseendbereich übergreift vorzugsweise zumindest einen nach radial außen offenen Bereich des Bremssattels, da dort typischerweise ein hoher Bremsstaubaustritt erfolgt, der neben dem Bremsenabrieb, der den Bremssattel in Tangentialrichtung verlässt, die größte Emissionsquelle darstellt. Bevorzugt handelt es sich bei dem Filtermedium um einen zusammenhängenden Materialstreifen, der sich sowohl über die Mehrzahl der innenliegenden Zungen als auch über die Innenseite der Gehäuseumfangswand im Gehäuseendbereich erstreckt.

Um zu verhindern, dass Luft durch den Staudruck bei der Fahrt entgegen der Filtrationsrichtung durch das Filtermedium gepresst wird, k an der Gehäusewand, insbesondere an der Gehäuseumfangswand, zumindest eine sich nach außen erstreckende Rippe angeordnet oder ausgebildet. Vorzugsweise sind eine Mehrzahl von nach außen ragenden Rippen an der Gehäusewand, insbesondere der Gehäuseumfangswand, vorgesehen. Die zumindest eine nach außen ragende Rippe kann bevorzugt im Bereich der zumindest einen Öffnung vorgesehen sein, so dass die Rippe die jeweilige Öffnung in Fahrtrichtung zumindest teilweise verdeckt, so dass ein durch die Fahrt erzeugter dynamischer Druck nicht auf die Öffnung einwirkt.Vorzugsweise sind mehrere nach außen ragende Rippen jeweils im Bereich einer Öffnung zum Austritt gefilterter Luft vorgesehen, bevorzugt ist jede der Öffnungen mit einer vorbeschriebenen Rippe versehen.

Das Filtermedium ist vorzugsweise derart ausgebildet, dass es auch bei einer Temperatur von mehr als 600°C stabil ist, um den Temperaturen in unmittelbarer Umgebung einer Scheibenbremse widerstehen zu können. Das Filtermedium kann dabei ein Metall, ein Metallfaservlies, Glas, Keramik und/oder einen hochtemperaturbeständigen Kunststoff, insbesondere Polyetheretherketon, aufweisen. Jedoch auch das Gehäuse soll vorteilhaft über eine hinreichende Temperaturbeständigkeit verfügen; zu diesem Zweck kann es aus einem Metallblech, bevorzugt Stahlblech, ausgebildet sein. Neben der hervorragenden Temperaturbeständigkeit bietet Stahlblech den weiteren Vorteil, dass das Gehäuse durch einen einfachen Umformprozess erhalten werden kann, beispielsweise durch Tiefziehen.

Das ringsegmentförmige Gehäuse deckt vorzugsweise einen großen Winkelbereich der Bremsscheibe ab, um eine hohe Filtrationswirkung zu erzielen. Das Gehäuse erstreckt sich dabei vorzugsweise über einen Ringsegmentwinkel von mehr als 45°, insbesondere von mehr als 75°, besonders bevorzugt von mehr als 90°. Es ist bei der Wahl eines geeigneten Umgriffswinkels ein Zielkonflikt zwischen dem Anteil abzufiltrierender Partikel sowie der der Scheibenbremse zur Verfügung stellbaren Kühlleitsung zu lösen.

Zur Erleichterung der Montage des Gehäuses kann das Gehäuse eine erstes und ein zweites Gehäuseteil aufweisen. Die beiden Gehäuseteile sind dabei vorzugsweise zumindest teilweise axial beidseitig der Bremsscheibe anordenbar. Besonders bevorzugt sind das erste Gehäuseteil und das zweite Gehäuseteil reversibel lösbar verbindbar. Alternativ können die beiden Gehäuseteile auch unlösbar verbunden sein, beispielsweise verschweißt. Vorteilhaft wird gemäß dieser Ausführungsform das Filtermedium bereits vor dem Verbinden der Gehäuseteile eingelegt, so dass zumindest der Vormontageprozess vereinfacht ist, wenn auch nicht der Austausch des Filtermedioums im Service. Es ist in diesem Fall jedoch denkbar, im Servicefall den gesamten Bremsstaubfilter (inkl. Gehäuse+Filtermedium) auszutauschen, um diesen beispielsweise einer Aufarbeitung zuzuführen. Alternativ zu einer Verschweißung kann vorgesehen sein, dass das erste Gehäuseteil und das zweite Gehäuseteil miteinander über eine Bördelverbindung verbunden sind.

Zur Verbindung der beiden Gehäuseteile kann eine Schraubverbindung, eine Clipverbindung, ein Klappmechanismus und/oder ein Schwenkmechanismus vorgesehen sein.

Die Gehäuseumfangswand kann Teil des ersten Gehäuseteils oder des zweiten Gehäuseteils sein, so dass diese mit einer der beiden Gehäuseseitenwänder verbunden ist. Die Gehäuseumfangswand kann ferner zumindest teilweise aus sich überlappenden Gehäuseteilen ausgebildet sein.

Besonders bevorzugt weist das erste Gehäuseteil die zumindest eine nach innen ragende Zunge auf und das zweite Gehäuseteil weist zumindest eine Öffnung auf. Weiter bevorzugt sind alle nach innen ragenden Zungen an dem ersten Gehäuseteil und alle Öffnungen am zweiten Gehäuseteil vorgesehen. Die getrennte Ausbildung von Zunge(n) und Öffnung(en) erleichtert signifikant die Herstellung des Bremsstaubpartikelfilters, da sowohl die Öffnungen, optional mit korrespondierenden Rippen, als auch die innenliegenden Zungen durch Stanzen hergestellt werden können.

Ein Gehäuseteil kann relativ zu einem ortsfest verbleibenden weiteren Gehäuseteil verschwenkbar sein. Die Schwenkachse eines solchen Schnwenkmechanismus kann sich parallel zu einer die beiden Gehäuseseitenwände verbindenden Achse, insbesondere parallel zur Rotationsachse der Bremsscheibe, erstrecken. In diesem Fall ist besonders bevorzugt das Gehäuseteil, das die Gehäuseumfangswand aufweist, zumindest teilweise relativ zu dem weiteren Gehäuse verschwenkbar. Alternativ oder zusätzlich dazu kann die Schwenkachse in radialer Richtung des Gehäuses bzw. in Bezug zur Bremsscheibe verlaufen, d.h. normal zur Rotationsachse der Bremsscheibe. In diesem Fall ist vorzugsweise eine erste Gehäuseseitenwand relativ zu dem weiteren Gehäuse verschwenkbar.

Die vorbeschriebene Vershwenkbarkeit verinfacht einen Austausch des Filtermediums im Servicefall deutlich.

Die erfindungsgemäße Aufgabe wird weiterhin gelöst durch eine Scheibenbremsenanordnung mit einer Bremsscheibe, einem Bremssattel und einem zuvor beschriebenen Bremsstaubpartikelfilter.

Der Bremsstaubpartikelfilter kann eine ortsfeste Position relativ zu dem Bremssattel, einem Radlagergehäuse und/oder einem Spritzschutz aufweisen. Alternativ oder zusätzlich dazu kann der Bremsstaubpartikelfilter am Bremssattel, an einem Radlagergehäuse und/oder an einem Spritzschutz befestigt sein, wobei eine Befestigung am Bremssattel vorteilhaft vorgesehen werden kann, wenn es sich um einen so genannten Festsattel handelt. Besonders vorteilhaft kann der Bremsstaubpartikelfilter an den selben Befestigungspunkten mit dem Radlagergehäuse verbunden werden wie auch der Bremssattel. Ferner können die Schrauben, mit denen der Bremssattel mit dem Radlagergehäuse verschraubt ist, zumindest im Bereich eines Schraubenkopfs ein Sacklochgewinde aufweisen, so dass der Bremsstaubpartikelfilter mit den Schrauben verbindbar ist, so dass vorteilhaft nicht die sicherheitskritische Verschraubung des Bremssattel(halters) mit dem Radlagergehäuse beeinflusst wird (Setzen/Vorspannkraftänderung).

In besonders bevorzugter Ausgestaltung der Erfindung kann es sich bei einem Gehäuseteil des Bremssatubpartikelfilters um ein die Bremsscheibe innenliegend zumindest teilweise bedeckkendes Spritzschutzelement, insbesondere Spritzschutzblech, handeln. Hierdurch kann auf ein zusätzliches Spritzschutzblech verzichtet werden, so dass Gewicht eingespart werden kann, was auf Grund einer Anordnung im ungefederten Bereich eines Fahrwerks fahrdynamische Vorteile bietet.

Um eine besonders effektive Partikelabscheidung zu bewirken, ist der Bremsstaubpartikelfilter vorzugsweise unmittelbar an den Bremssattel anschließend angeordnet. Der Bremsstaubpartikelfilter ist dabei vorzugsweise dem Bremssattel nachgelagert angeordnet, wobei sich der Begreiff "nachgelagert" auf die Rotationsrichtung der Bremsscheibe bei einer bestimmungsgemäßen Vorwärtsfahrt des Fahrzeuges bezieht, an dem die Scheibenbremsenanordnung vorgesehen ist.

Der Bremsstaubpartikelfilter bedeckt vorzugsweise zumindest teilweise eine Außenseite des Bremssattels, besonders bevorzugt eine Umfangs-Außenseite des Bremssattels. Die Überdeckung des Bremssattels erfolgt dabei vorzugsweise mit dem Gehäuseendbereich. Besonders bevorzugt ist der Bremssattel im Bereich der Umfangs-Außenseite, an der meist Öffnungen zur Kühlluftzufuhr und/oder Service (Entnahme der Reibbeläge) vorliegen, vollständig, zumindest jedoch im Bereich der Öffnungen, von dem Gehäuseendbereich des Bremsstaubpartikelfilters überdeckt, so dass keine ungefilterte Abströmung in diesem Bereich auftritt, sondern von dort austretende, partikelbeladene Luft zunächst durch das Filtermedium und schließlich durch die Öffnung in der Gehäuseumfangswand in die Umgebung strömt.

In weiter bevorzugter Ausgestaltung der Scheibenbremsenanordnung ist die zumindest eine nach innen ragende Zunge mit ihrem freien Ende zum Bremssattel hin ausgerichtet. Vorzugsweise sind mehrere, insbesondere alle, Zungen mit ihren jeweils freien Enden zum Bremssattel hin ausgerichtet. Hierdurch kann die Filtereffektivität weiter erhöht werden, da Bremsstaubpartikel, die von der Rotation tangential mitgenommen werden quasi durch die Form der Zungen aufgefangen werden können.

Weitere Merkmale und Vorteile der Erfindung ergeben sich aus der nachfolgenden Beschreibung mehrerer Ausführungsbeispiele der Erfindung, aus den Patentansprüchen sowie aus den Figuren, die erfindungswesentliche Einzelheiten zeigt. Die in den Figuren gezeigten Merkmale sind derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Variaten der Erfindung verwirklicht sein und sind demgemäß miteinander kombinierbar.

### Beschreibung der Zeichnungen

In der Zeichnung zeigen:
- Fig. 1: eine Seitenansicht auf eine erfindungsgemäße Scheibenbremsenanordnung mit einer ersten Ausführungsform des Bremsstaubpartikelfilters;
- Fig. 2: ein Querschnitt durch den Bremsstaubpartikelfilter gemäß Fig. 1;
- Fig. 3: eine isometrische Ansicht des Bremsstaubpartikelfilters gemäß Fig. 1;
- Fig. 4: eine isometrische Ansicht eines ersten Gehäuseteils und eines zweiten Gehäuseteils des Gehäuses eines Bremsstaubpartikelfilters in einer zweiten Ausführungsform der Scheibenbremsenanordnung;
- Fig. 5: eine isometrische Ansicht auf das erste Gehäuseteil des Gehäuses des Bremsstaubpartikelfilters einer dritten Ausführungsform der Scheibenbremsenanordnung mit nach innen ragenden Zungen und einem zweiten Gehäuseteil mit Öffnungen und nach außen ragenden Rippen;
- Fig. 6: eine isometrische Ansicht auf die Verbindung eines ersten Gehäuseteils und eines zweiten Gehäuseteils einer vierten Ausführungsform der Scheibenbremsenanordnung durch einen Schwenkmechanismus und/oder einen Klappmechanismus; und
- Fig. 7: eine isometrische Ansicht auf die Verbindung des ersten Gehäuseteils und des zweiten Gehäuseteils durch einen Schwenkmechanismus und/oder einen Klappmechanismus entlang einer weiteren Schwenkachse in einer fünften Ausführungsform der Scheibenbremsenanordnung; und
- Fig. 8: eine isometrische Ansicht eines Bremsstaubpartikelfilters gemäß einer weiteren Ausführungsform mit Zungen sowohl an einer Gehäuseumfangswand als auch an einer Gehäuseseitenwand.

### Ausführungsformen der Erfindung

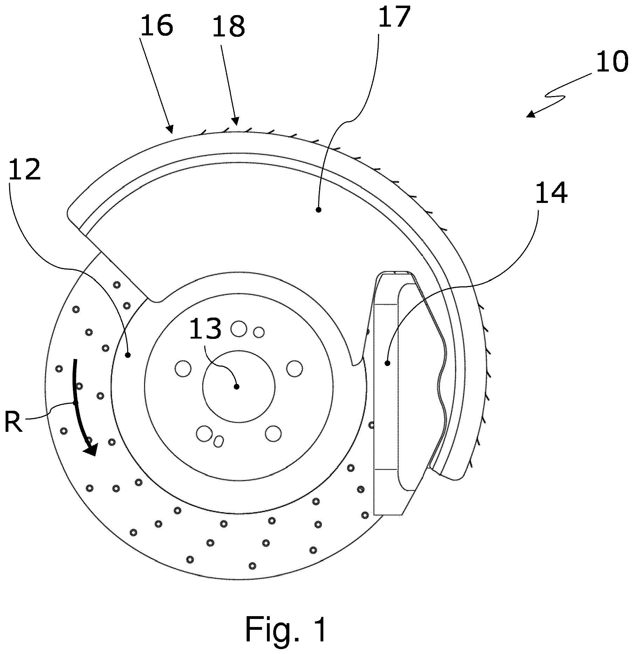

**Fig. 1** zeigt eine Seitenansicht auf eine Scheibenbremsenanordnung **10** mit einer Bremsscheibe **12,** welche eine Rotationsachse bzw. Drehachse **13** aufweist, mit einem Bremssattel **14** und einem Bremsstaubpartikelfilter **16** in einer ersten Ausführungsform. Hierbei ist der Bremsstaubpartikelfilter 16 in seiner Position relativ zu dem Bremssattel 14 ortsfest angeordnet und/oder am Bremssattel 14 befestigt. Die Scheibenbremsenanordnung 10 weist ferner ein Radlagergehäuse auf (nicht gezeigt), an dem der Bremssattel 14 befestigt ist, und der Bremsstaubpartikelfilter 16 kann in seiner Position relativ zu dem Radlagergehäuse ortsfest angeordnet und/oder am Radlagergehäuse befestigt sein. Alternativ oder zusätzlich dazu kann die Scheibenbremsenanordnung 10 einen Spritzschutz (nicht gezeigt) in Form eines Spritzschutzblechs aufweisen und der Bremsstaubpartikelfilter 16 in seiner Position relativ zu dem Spritzschutz ortsfest angeordnet und/oder am Spritzschutz befestigt sein.

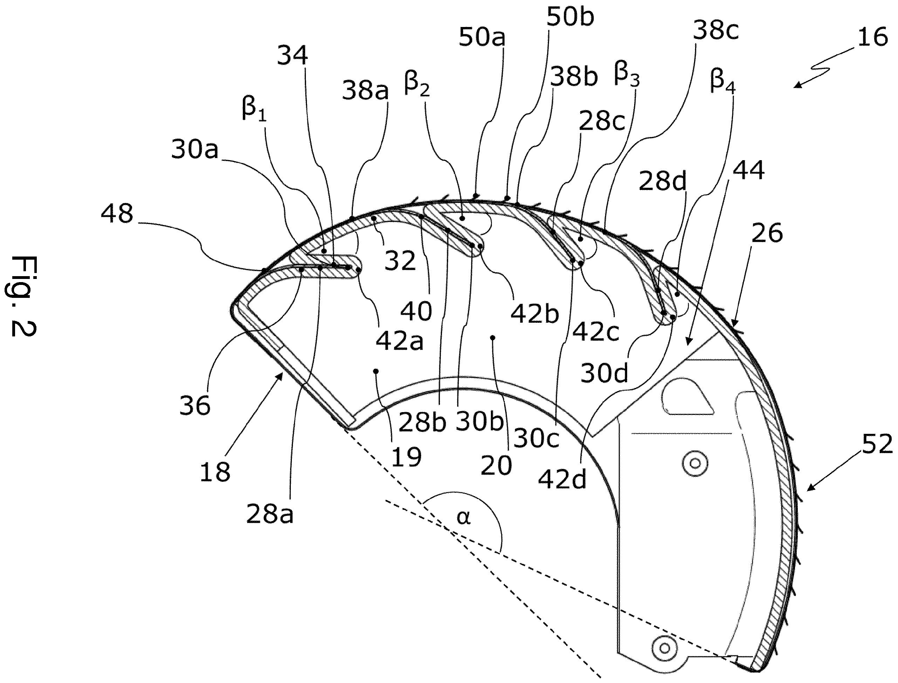

Der Bremstaubpartikelfilter 16 weist eine erste Gehäuseseitenwand **17** auf, welche einen Teil eines ringsegmentförmigen Gehäuses **18** bildet. Zur ersten Gehäuseseitenwand 17 befindet sich entlang der Drehachse 13 der Bremsscheibe 12 axial beabstandet eine zweite Gehäuseseitenwand **19** (siehe Fig. 2), welche ebenfalls einen Teil des ringsegmentförmigen Gehäuses 18 bildet und zwischen denen die Bremsscheibe 12 im Gehäuseinnenraum aufgenommen ist.

Der Bremsstaubpartikelfilter 16 kann insbesondere in Rotationsrichtung R der Bremsscheibe 12 bei Vorwärtsfahrt eines Fahrzeugs, an dem die Scheibenbremsenanordnung 10 angeordnet werden kann, dem Bremssattel 14 nachgelagert angeordnet sein.

In **Fig. 2** ist ein Querschnitt durch den Bremsstaubpartikelfilter 16 zum Filtern von mit Bremsstaub versehener Luft dargestellt. Durch das ringsegmentförmige Gehäuse 18 kann der Bremsstaubpartikelfilter 16 die Bremsscheibe 12 (siehe Fig. 1) zumindest teilweise im Gehäuseinnenraum **20** aufnehmen. Das ringsegmentförmige Gehäuse 18 kann sich über einen Ringsegmentwinkel **α** von in diesem Ausführungsbeispiel mehr als 90°, erstrecken. Der Bremsstaubpartikelfilter 16 ist bündig an dem Bremssattel 14 (siehe Fig. 1) angeordnet, so dass beim Bremsen durch die Bremsscheibe 12 (siehe Fig. 1) bewegte Luft von dem Bremssattel 14 in den Bremsstaubpartikelfilter 16 strömen kann.

Das Gehäuse 18 weist eine sich radial außen in Umfangsrichtung des Bremsstaubpartikelfilters 16 erstreckende Gehäuseumfangswand **26** auf. Die Gehäuseseitenwände 17 (siehe Fig. 1), 19 sind über die Gehäuseumfangswand 26 miteinander verbunden.

Der Bremsstaubpartikelfilter 16 weist ferner Zungen **28a, 28b, 28c, 28d** auf. Diese Zungen 28a - 28d sind an der Gehäuseumfangswand 26 des Bremsstaubpartikelfilters 16 angeordnet oder - wie in Fig. 2 - ausgebildet. Sie ragen im Gehäuseinnenraum 20 des Bremsstaubpartikelfilters 16 von der Gehäuseumfangswand 26 nach innen. Dabei schließen sie mit der Gehäuseumfangswand 26 jeweils einen Winkel **β₁, β₂, β₃, β₄** ein. An diesen Zungen 28a - 28d kann die Luft, welche in den Bremsstaubpartikelfilter 16 einströmt, in Richtung der Gehäuseumfangswand 26 geführt werden. Die Zungen 28a - 28d sind mit ihrem jeweiligen freien Ende **30a, 30b, 30c, 30d** zum Bremssattel 14 (siehe Fig. 1) hin ausgerichtet.

An den Zungen 28a - 28d ist ein Filtermedium **32** zur Reinigung der Luft von Partikeln angeordnet, welches die Zungen 28a - 28d bedeckt. Das Filtermedium 32 erstreckt sich sowohl über die Seite der jeweiligen Zunge 28a - 28d, welche der Gehäuseumfangswand 26 zugewandt ist, als auch über die Seite, welche von der Gehäuseumfangswand 26 abgewandt ist, so dass die Zungen 28a-28d jeweils mit dem Filtermedium 32 bekleidet sind. Bei dem Filtermedium handelt es sich um einen zusammenhängenden Materialstreifen, der sich sowohl über alle Zungen 28a-28d als auch über die Innenseite der Gehäuseumfangswand 26 im Gehäuseendbereich 52 erstreckt.

Die zugewandte Seite ist hier beispielhaft an der Zunge 28a mit **34** und die abgewandte Seite mit **36** bezeichnet. Die effektive Filterfläche ist somit in Umfangsrichtung des Gehäuseinnenraums 20 durch die Zungen 28a-28d vergrößert. Das Filtermedium 32 ist ferner an Abschnitten **38a, 38b, 38c** der Gehäuseumfangswand 26 zwischen den Zungen 28a - 28d angeordnet. Hierdurch ist das Filtermedium 32 unmittelbar mit der Gehäuseumfangswand 26 verbunden. Insbesondere ist es an der Gehäuseumfangswand 26 und/oder an den Zungen 28a - 28d befestigt. Alternativ dazu kann es auch über weitere Zwischenschichten mittelbar mit der Wand des Gehäuses 18 verbunden sein. Die Zungen 28a - 28d können jeweils eine oder mehrere Durchgangsausnehmungen aufweisen (nicht gezeigt), welche von dem Filtermedium 32 bedeckt sind.

Die Zungen 28a - 28d bilden eine Stützstruktur **40** für das Filtermedium 32. Hierzu ragen die Zungen 28a - 28d in Falten **42a, 42b, 42c, 42d** des Filtermediums 32 hinein.

Das Filtermedium 32 kann zumindest einen ersten Bereich und einen zweiten Bereich aufweisen (nicht gezeigt). Der erste Bereich kann zwischen der jeweiligen Zunge 28a - 28d und dem zweiten Bereich ausgebildet sein. Hierbei kann zu einem Grobfiltern der erste Bereich eine größere Porosität aufweisen als der zweite Bereich. Das Filtermedium kann zusätzlich auch einen dritten und/oder weitere solcher Bereiche verschiedener Porositäten aufweisen. Der Übergang von einer größeren Porosität des Filtermediums zu einer kleineren Porosität in Richtung der Zunge 28a-28d kann alternativ dazu auch kontinuierlich erfolgen (Gradient).

Bei einer weiteren Ausführungsform weist der Bremsstaubpartikelfilter zusätzlich zu dem Filtermedium 32 ein weiteres Filtermedium auf (nicht gezeigt). Hierbei ist das Filtermedium 32 zwischen der jeweiligen Zunge 28a - 28d und dem weiteren Filtermedium angeordnet. Das weitere Filtermedium weist eine größere Porosität auf als das erste Filtermedium. Bei einer alternativen Ausführungsform kann der Bremsstaubpartikelfilter 16 zusätzliche Filtermedien mit unterschiedlicher Porosität aufweisen.

Der Bremsstaubpartikelfilter 16 kann derart ausgebildet sein, dass die Filterwirkung auf die durch die Bremsscheibe 12 in Umfangsrichtung bewegte Luft zunimmt. Hierzu kann die Porosität des Filtermediums 32 in Umfangsrichtung des Gehäuses, beginnend in einem zur Anlage am Bremssattel 14 (siehe Fig. 1) vorgesehenen Anlagenbereich **44** des Bremsstaubpartikelfilters 16, abnehmen. Alternativ oder zusätzlich dazu kann die Dicke des Filtermediums 32 in Umfangsrichtung des Gehäuses 18, beginnend in dem zur Anlage am Bremssattel 14 (siehe Fig. 1) vorgesehenen Anlagenbereich 44 des Bremsstaubpartikelfilters 16, zunehmen. Alternativ oder zusätzlich dazu kann eine Zunge 28a - 28d einen kleineren Winkel β₁, β₂, β₃, β₄ mit der Gehäuseumfangswand 26 einschließen als eine benachbarte Zunge 28a - 28d, die sich weiter von dem genannten Anlagebereich 44 entfernt befindet. Alternativ oder zusätzlich dazu kann das freie Ende 30a - 30d einer Zunge 28a - 28d weniger weit radial nach innen in den Innenraum 20 des Gehäuses 18 vorstehen als eine benachbarte Zunge 28a - 28d, die sich von diesem Anlagebereich 44 weiter entfernt befindet. Alternativ oder zusätzlich dazu kann die in den Gehäuseinnenraum 20 ragende Fläche zumindest einer Zunge 28a - 28d kleiner sein als die in den Gehäuseinnenraum 20 ragende Fläche einer benachbarten Zunge 28a - 28d, die sich von diesem Anlagebereich 44 weiter entfernt befindet.

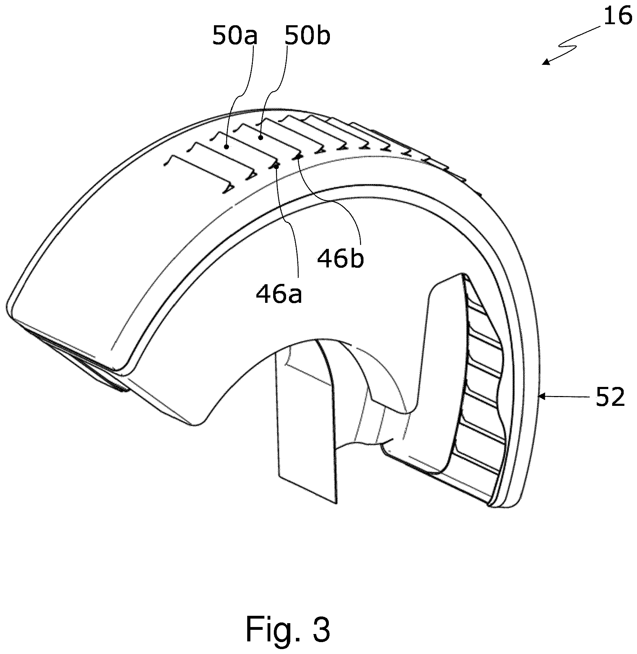

Der Bremsstaubpartikelfilter 16 weist in seiner Gehäuseumfangswand 26 Öffnungen **46a, 46b** auf (siehe Fig. 3). Durch diese Öffnungen 46a, 46b kann die gereinigte Luft in den Außenraum entweichen. Ein Teil der Öffnungen 46a, 46b wird durch die mit dem Filtermedium 32 bedeckten Zungen 28a - 28d in der Richtung senkrecht zur Umfangsrichtung des Bremsstaubpartikelfilters 16 von dem Gehäuseinnenraum 20 aus vollständig überdeckt. Ein anderer Teil der Öffnungen 46a, 46b wird nur durch das Filtermedium 32 überdeckt. Hierdurch ist insgesamt sichergestellt, dass nur gereinigte Luft durch die Öffnungen 46a, 46b in den Außenraum entweichen kann.

An der Gehäuseumfangswand 26 sind ferner auf der Außenseite **48** nach außen Rippen angeordnet und/oder ausgebildet, von denen zwei hier beispielhaft mit **50a, 50b** bezeichnet sind. Die Rippen 50a, 50b sind an den Öffnungen 46a, 46b angeordnet, so dass die nach außen tretende Luft durch die Rippen 50a, 50b in eine gewünschte Richtung gelenkt wird. Die Rippen 50a, 50b verhindern eine Durchströmung des Filtermediums von der Reinseite zur Rohseite durch einen dynamischen Druck, der durch die Fahrgeschwindigkeit erzeugt wird.

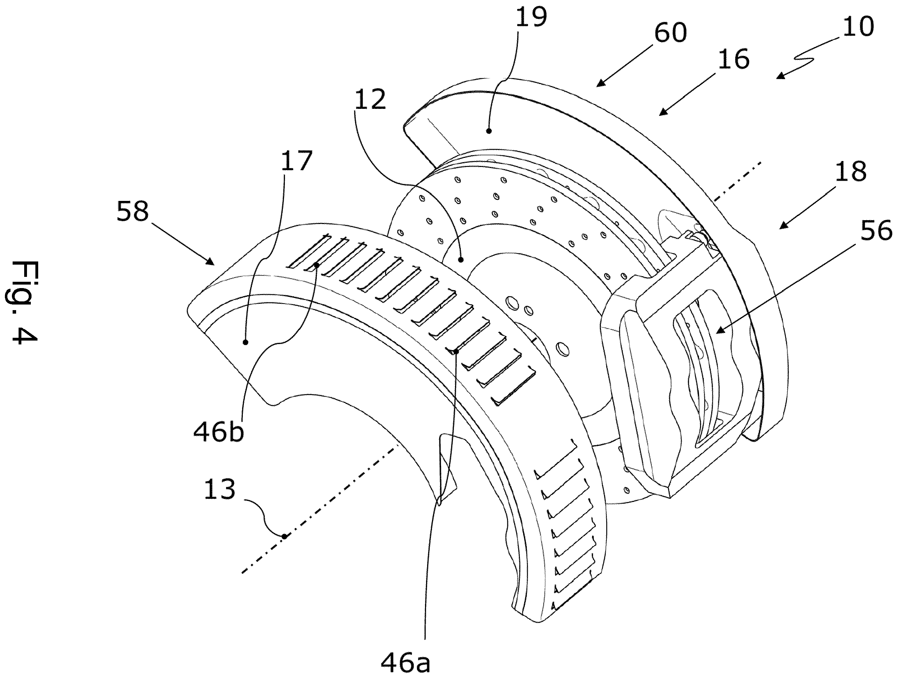

Der Bremsstaubpartikelfilter 16 weist einen Gehäuseendbereich **52** auf. Der Gehäuseendbereich 52 kann zumindest teilweise die Gehäuseseitenwände 17, 19 und die Gehäuseumfangswand 26 aufweisen. Außerdem weist er das an der Gehäuseumfangswand 26 angeordnete Filtermedium 32 auf. Im Gehäuseendbereich 52 sind ebenfalls nach außen ragenden Rippen 50a, 50b und Öffnungen 46a, 46b in der Gehäuseumfangswand 26 an den Rippen 50a, 50b angeordnet und/oder ausgebildet. Die Gehäuseumfangswand 26 erstreckt sich bis in den Gehäuseendbereich 52 hinein. Der Gehäuseendbereich 52 überdeckt in Umfangsrichtung des Bremsstaubpartikelfilters 16 von der radialen Außenseite des Bremsstaubpartikelfilters 54 ausgehend den Bremssattel 14, insbesondere einen Spalt **56** des Bremssattels 14 (siehe Fig. 4). Der Gehäuseendbereich weist zu diesem Zweck eine Aussparung auf, die an die jeweilige Form des Bremssattels anpassbar ist, hier einen Bremssattel mit zumindest zwei Kolben.

**Fig. 3** zeigt eine isometrische Ansicht des Bremsstaubpartikelfilters 16. Insbesondere sind die nach außen gerichteten Rippen 50a, 50b sowie die Öffnungen 46a, 46b zu sehen. Das Gehäuse 18 kann einstückig, d. h. einteilig, ausgebildet sein.

Wie in **Fig. 4** gezeigt, kann das Gehäuse 18 des Bremsstaubpartikelfilters 16 in einer zweiten Ausführungsform der Scheibenbremsenanordnung 10 einen ersten Gehäuseteil **58** und einen zweiten Gehäuseteil **60** aufweisen. Das erste Gehäuseteil 58 weist dabei die erste Gehäuseseitenwand 17 auf. Das zweite Gehäuseteil 60 weist die zweite Gehäuseseitenwand 19 auf, welche zu der ersten Gehäuseseitenwand 17 axial versetzt ist. Somit kann die erste Gehäuseseitenwand 17 entlang der Drehachse 13 der Bremsscheibe 12 axial versetzt zu der Bremsscheibe 12 und die zweite Gehäuseseitenwand 19 auf der zu der ersten Gehäuseseitenwand 17 abgewandten Seite der Bremsscheibe 12 angeordnet werden. Das erste Gehäuseteil 58 weist Öffnungen 46a, 46b auf. Das zweite Gehäuseteil 60, insbesondere die zweite Gehäuseseitenwand 19, kann in Form eines Spritzschutzblechs ausgebildet sein, so dass im Zweifelsfall auf ein separates Spritzschutzblech der Bremsscheibe verzichtet werden kann, was insbesondere für OE-Anwendungen interessant ist.

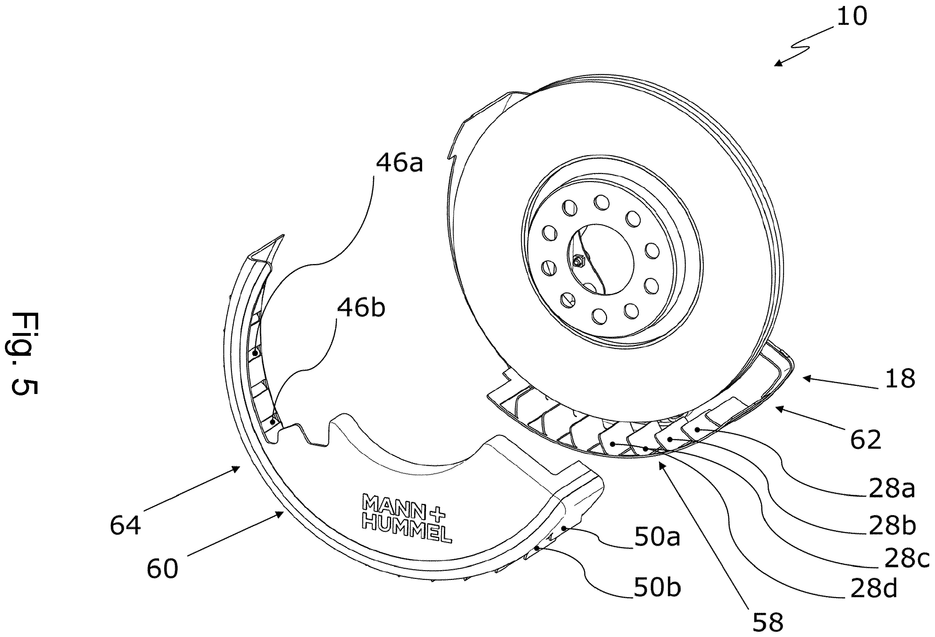

Wie in **Fig. 5** gezeigt, kann in einer dritten Ausführungsform der Scheibenbremsenanordnung 10 das erste Gehäuseteil 58 des Gehäuses 18 die nach innen ragenden Zungen 28a - 28d aufweisen. Das zweite Gehäuseteil 60 kann die Öffnungen 46a, 46b und die nach außen ragenden Rippen 50a, 50b aufweisen. Die nach innen ragenden Zungen 28a - 28d können durch Ausstanzen aus der Gehäuseumfangswand **62** des ersten Gehäuseteils 58 ausgebildet werden. Die nach außen ragenden Rippen 50a, 50b können zusammen mit den Öffnungen 46a, 46b durch Ausstanzen der Rippen 50a, 50b aus der Gehäuseumfangswand **64** des zweiten Gehäuseteils 60 ausgebildet werden. Das Ausstanzen der Rippen 50a, 50b und Zungen 28a - 28d in Umfangsrichtung des Bremsstaubpartikelfilters 16 im montierten Zustand an der jeweiligen Gehäuseumfangswand 62, 64 kann für jedes Paar von zusammengehörenden Zungen 28a - 28d und Rippen 50a, 50b an der gleichen Stelle erfolgen. Dann kann durch Aufschieben des ersten Gehäuseteils 58 auf das zweiten Gehäuseteil 60 auf einfache Weise gewährleistet werden, dass die Öffnungen 46a, 46b an den richtigen Stellen zwischen jeweils einer Zunge 28a - 28d und Rippe 50a, 50b ausgebildet sind, d.h. die Öffnungen 46a,46b passgenau über den Zwischenräumen zwischen jeweils benachbarten Zungen 28a-28d liegen.

Das erste Gehäuseteil 58 und das zweite Gehäuseteil 60 sind miteinander verbindbar. Insbesondere sind sie reversibel miteinander verbindbar, um Wartungsarbeiten schnell durchführen zu können. Diese Verbindung kann unter anderem durch eine Schraubverbindung des Bremsstaubpartikelfilters erfolgen. Hierzu kann ein Gehäuseteil 58, 60 an seiner Außenseite ein Gewinde aufweisen und das andere Gehäuseteil 58, 60 an seiner Innenseite ein Gewinde, derart, dass ein Gehäuseteil 58, 60 auf das andere Gehäuseteil 58, 60 aufgeschraubt werden kann. Alternativ oder zusätzlich dazu können das erste Gehäuseteil 58 und das zweite Gehäuseteil 60 durch eine Schweißverbindung, eine Clipsverbindung und/oder eine Bördelverbindung verbunden werden.

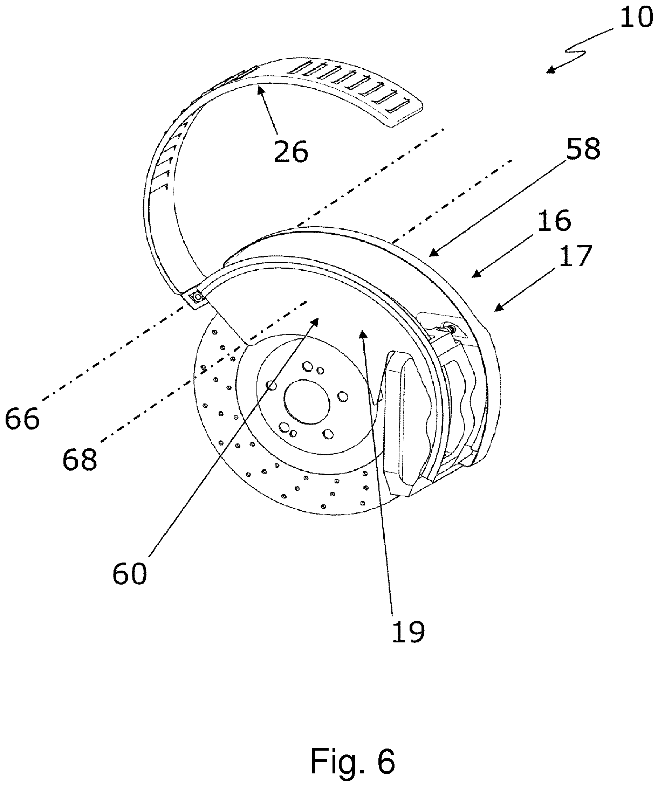

Wie in **Fig. 6** gezeigt, können in einer vierten Ausführungsform der Scheibenbremsenanordnung 10 das erste Gehäuseteil 58 und das zweite Gehäuseteil 60 durch einen Schwenkmechanismus und/oder einen Klappmechanismus miteinander verbindbar und/oder verbunden sein, um den Bremsstaubpartikelfilter 16 schnell öffnen und wieder schließen zu können. Die Schwenkachse **66** des Schwenkmechanismus kann hierbei parallel zu einer Achse **68** angeordnet sein, welche die beiden Gehäuseseitenwände 17, 19 verbindet bzw. durch diese hindurch verläuft, die in diesem Fall zudem parallel zur Rotationsachse der Bremsscheibe verläuft. Dann kann die Gehäuseumfangswand 26 relativ zu den beiden Gehäuseseitenwänden 17, 19 verschwenkt werden.

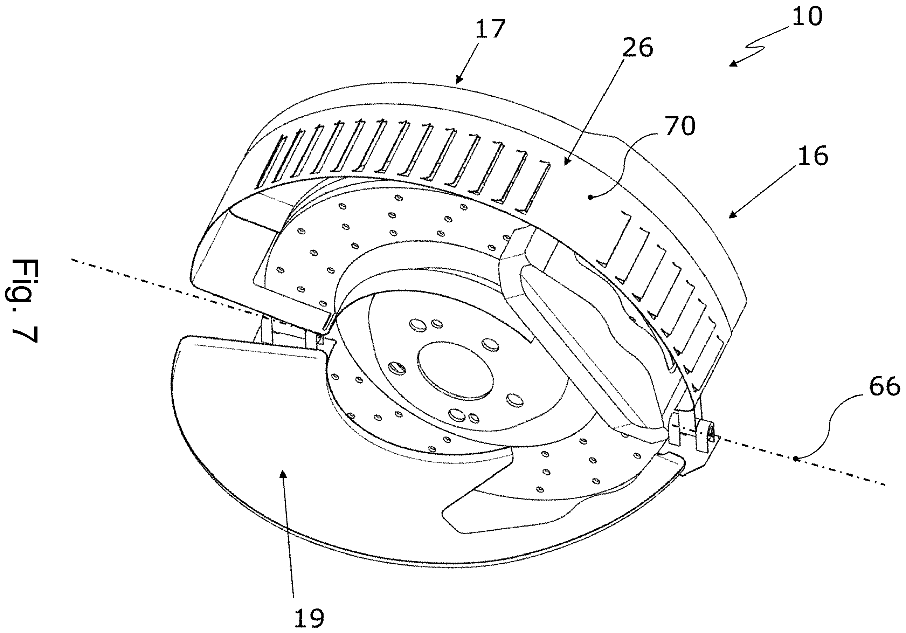

Alternativ oder zusätzlich dazu kann sich in einer fünften Ausführungsform der Scheibenbremsenanordnung 10 die Schwenkachse 66 des Schwenkmechanismus senkrecht zur Außenumfangsseite **70** der Gehäuseumfangswand 26 des Bremsstaubpartikelfilters 16 im montierten Zustand erstrecken, wie in **Fig. 7** gezeigt ist. Dann kann die erste Gehäuseseitenwand 17 relativ zu der zweiten Gehäuseseitenwand 19 und der Gehäuseumfangswand 26 verschwenkt werden.

Unter Vornahme einer Zusammenschau aller Figuren der Zeichnung betrifft die Erfindung zusammenfassend einen Bremsstaubpartikelfilter 16 für eine Scheibenbremsenanordnung 10 mit einer Bremsscheibe 12 und einem Bremssattel 14. Im Gehäuseinnenraum 20 des Gehäuses 18 des Bremsstaubpartikelfilters 16 ist zumindest eine Zunge 28a-28d angeordnet oder ausgebildet, wobei zumindest ein Abschnitt dieser Zunge 28a-28d radial nach innen ragt. Die Zunge 28a-28d bildet eine Stütze 40 für ein Filtermedium 32 des Bremsstaubpartikelfilters 16 aus. Weiterhin bedeckt das Filtermedium 32 die Oberfläche der Zunge 28a-28d zumindest teilweise, insbesondere vollständig. Das Gehäuse 18 weist die Form eines Ringsegments auf. Es kann zumindest zur teilweise Aufnahme der Bremsscheibe 12 im Gehäuseinnenraum 20 verwendet werden. Eine erste Gehäuseseitenwand 17 und eine zweite Gehäuseseitenwand 19 sowie eine Gehäuseumfangswand 26, 62, 64 bilden jeweils Teile des Gehäuses 18. Die Gehäuseseitenwände 17, 19 sind axial voneinander beabstandet. Die Gehäuseumfangswand 26, 62, 64 ist radial außen in Umfangsrichtung des Gehäuses 18 angeordnet. Die Gehäuseumfangswand 26, 62, 64 ist zwischen der ersten Gehäuseseitenwand 17 und der zweiten Gehäuseseitenwand 19 angeordnet oder ausgebildet. Der Bremsstaubpartikelfilter 16 ist zum Auffangen von beim Bremsen entstehenden Partikeln ausgebildet.

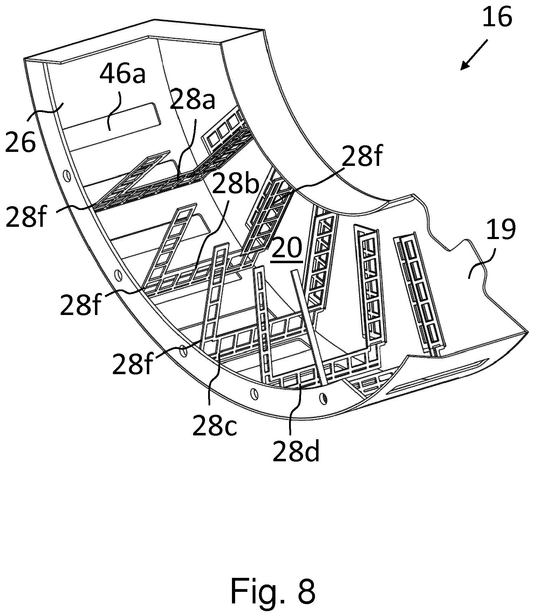

In Fig. 8 ist schließlich eine weitere Ausführungsform des Bremsstaubpartikelflters 16 gezeigt, der in seinem Gehäuseinnenraum 20 sowohl die vorbeschriebenen, in Umfangsrichtung beabstandeten Zungen 28a - 28d, die sich von der Gehäuseumfangswand 19 erstrecken, als auch weitere Zungen 28f, die sich von einer Gehäuseseitenwand 19 erstrecken, aufweist. Die Zungen 28a-28f sind derart ausgebildet, dass jeweils an einem gemeinsamen Umfangswinkel vorliegende "Seitenzungen" 28f und "Umfangszungen" 28a-28d eine zusammenhängende Zunge bilden. Die sich ergebende zusammenhängende Zunge hat hierbei eine im Wesentlichen U-förmige Grundform. Um die Struktur der Zungen 28a-28f besser erkennen zu können, ist in der isometrischen Ansicht das Filtermedium ausgeblendet. Die Zungen 28a-28f weisen jeweils eine Vielzahl Durchgangsausnehmungen auf, durch die die zu filternde, mit Bremsstaub beladene Luft unter Passieren des Filtermediums geleitet wird. Durch die Kombination der "Umfangszungen" mit den "Seitenzungen" kann die Abscheideleistung weiter verbessert werden. Die Zungen 28a-28f sind in dem gezeigten Ausführungsbeispiel aus einem Gittermaterial, vorzugsweise einem Metallgitter, gefertigt, das die Durchgangsausnehmungen schon als Rohmaterial aufweist, was die Fertigung vereinfacht.

## Patentansprüche

1. Bremsstaubpartikelfilter (16) für eine Scheibenbremsenanordnung (10) mit einer Bremsscheibe (12) und einem Bremssattel (14), wobei der Bremsstaubpartikelfilter (16) zum Auffangen von beim Bremsen entstehenden Partikeln ausgebildet ist und wobei der Bremsstaubpartikelfilter (16) Folgendes aufweist:
- Ein ringsegmentförmiges Gehäuse (18) zur zumindest teilweisen Aufnahme der Bremsscheibe (12) in einem Gehäuseinnenraum (20), wobei das Gehäuse (18) zwei axial zueinander beabstandete Gehäuseseitenwände (17, 19) und eine sich radial außen in Umfangsrichtung erstreckende Gehäuseumfangswand (26, 62, 64) aufweist und wobei die Gehäuseumfangswand (26, 62, 64) zwischen den Gehäuseseitenwänden (17, 19) angeordnet oder ausgebildet ist;
**dadurch gekennzeichnet, dass** der Bremsstaubpartikelfilter (16) zusätzlich aufweist:
- zumindest eine im Gehäuseinnenraum (20) zumindest abschnittsweise mit zumindest einer Radialkomponente von der Gehäuseumfangswand (26, 62, 64) nach innen ragende Zunge (28a, 28b, 28c, 28d),
- wobei die Zunge (28a, 28b, 28c, 28d) eine flache Querschnittsform aufweist und zumindest eine der Gehäuseumfangswand (26, 62, 64) zugewandte Grundfläche, eine in den Gehäuseinnenraum (20) ragende Deckfläche sowie zumindest eine Seitenfläche aufweist, und
- zumindest ein Filtermedium (32);
wobei die Zunge (28a, 28b, 28c, 28d) das Filtermedium (32) stützt und zumindest auf der zumindest einen Seitenfläche, insbesondere vollständig, mit dem Filtermedium (32) bedeckt ist.

2. Bremsstaubpartikelfilter nach Anspruch 1, wobei die Zunge (28a, 28b, 28c, 28d) einen im Wesentlichen rechteckförmigen Querschnitt hat, wobei ein Verhältnis einer breiten Seite zu einer schmalen Seite des rechteckförmigen Querschnitts zwischen 15 und 60, bevorzugt zwischen 20 und 40, liegt.

3. Bremsstaubpartikelfilter nach Anspruch 1 oder 2,
- bei dem die Zunge (28a, 28b, 28c, 28d) an einer Gehäusewand (17, 19, 26, 62, 64), insbesondere an der Gehäuseumfangswand (26, 62, 64), angeordnet oder ausgebildet ist, so dass das Filtermedium (32) mittelbar oder unmittelbar mit der Gehäusewand (17, 19, 26, 62, 64) verbunden ist; und/oder
- der ein Filterelement mit einer Filterelement-Stützstruktur und dem Filtermedium (32) aufweist, wobei die Filterelement-Stützstruktur die Zunge (28a, 28b, 28c, 28d) aufweist und das Filterelement, insbesondere reversibel austauschbar, im Gehäuse (18) angeordnet ist.

4. Bremsstaubpartikelfilter nach einem der Ansprüche 1 bis 3, wobei zumindest eine weitere Zunge (28f) vorgesehen ist, die sich in den Gehäuseinnenraum (20) von zumindest einer Gehäuseseitenwand (17,19) erstreckt, wobei bevorzugt die sich von der Gehäuseumfangswand (26, 62, 64) erstreckende Zunge (28a, 28b, 28c, 28d) und die sich von der Gehäuseseitenwand erstreckende Zunge (28f) eine zusammenhängende Zunge bilden, die eine L-förmige oder U-förmige Grundform aufweist.

5. Bremsstaubpartikelfilter nach einem der Ansprüche 1 bis 4, bei dem das Filtermedium (32) an der Zunge (28a, 28b, 28c, 28d) und/oder an der Gehäusewand (17, 19, 26) oder an der Filterelement-Stützstruktur befestigt ist, wobei das Filtermedium vorzugsweise eine Falte (42a, 42b, 42c, 42d) bildet, in die die Zunge (28a, 28b, 28c, 28d) zumindest teilweise ragt.

6. Bremsstaubpartikelfilter nach einem der vorherigen Ansprüche, bei dem die Zunge (28a, 28b, 28c, 28d) zumindest eine Durchgangsausnehmung aufweist, die von dem Filtermedium (32) bedeckt ist, wobei die Zunge (28a, 28b, 28c, 28d) vorzugsweise mehrere Durchgangsausnehmungen aufweist, die von dem Filtermedium (32) bedeckt sind.

7. Bremsstaubpartikelfilter nach einem der vorherigen Ansprüche, bei dem das Filtermedium (32) im Bereich der Zunge (28a, 28b, 28c, 28d) in Form einer Auffangtasche für Partikel ausgebildet ist, wobei die Auffangtasche im montierten Zustand des Bremsstaubpartikelfilters nach unten hin geschlossen ist, um ein Entweichen der Partikel aufgrund der auf die Partikel wirkenden Schwerkraft zu verhindern.

8. Bremsstaubpartikelfilter nach einem der vorherigen Ansprüche, bei dem eine erste Filterschicht zwischen einer zweiten Filterschicht und der Zunge (28a, 28b, 28c, 28d) angeordnet ist und die zweite Filterschicht eine größere Porosität aufweist als die erste Filterschicht, wobei insbesondere
- die erste Filterschicht in Form eines ersten Bereichs des Filtermediums (32) und die zweite Filterschicht in Form eines zweiten Bereichs des Filtermediums (32) ausgebildet ist; oder
- die erste Filterschicht in Form des Filtermediums (32) und die zweite Filterschicht in Form eines weiteren Filtermediums ausgebildet ist.

9. Bremsstaubpartikelfilter nach einem der vorherigen Ansprüche, **dadurch gekennzeichnet, dass** der Bremsstaubpartikelfilter (16) eine Mehrzahl von im Gehäuseinnenraum (20) nach innen ragenden Zungen (28a, 28b, 28c, 28d) aufweist, die in Umfangsrichtung beabstandet angeordnet sind, wobei die Zungen (28a, 28b, 28c, 28d) das Filtermedium (32) stützen und zumindest teilweise, insbesondere vollständig, mit dem Filtermedium (32) bedeckt sind, wobei vorzugsweise zumindest zwei Zungen (28a, 28b, 28c, 28d) einen unterschiedlichen Winkel (β₁, β₂, β₃, β₄) mit der Gehäuseumfangswand (26, 62, 64) einschließen.

10. Bremsstaubpartikelfilter nach einem der vorherigen Ansprüche, bei dem der Bremsstaubpartikelfilter (16) derart ausgebildet ist, dass die Filterwirkung auf die durch die Bremsscheibe (12) in Umfangsrichtung des Gehäuses (18) bewegte Luft zunimmt, indem insbesondere
- die Porosität des Filtermediums (32) in Umfangsrichtung des Gehäuses (18), beginnend in einem zur Anlage am Bremssattel (14) vorgesehenen Anlagebereich (44) des Bremsstaubpartikelfilters (16), abnimmt; insbesondere in Verbindung mit Anspruch 9, das Filtermedium (32) an einer Zunge (28a, 28b, 28c, 28d) eine größere Porosität aufweist als das Filtermedium (32) an der nächsten benachbarten Zunge (28a, 28b, 28c, 28d), die sich weiter von einem zur Anlage am Bremssattel (14) vorgesehenen Anlagebereich (44) des Bremsstaubpartikelfilters (16) entfernt befindet;
- die Dicke des Filtermediums (32) in Umfangsrichtung des Gehäuses (18), beginnend in einem zur Anlage am Bremssattel (14) vorgesehenen Anlagebereich (44) des Bremsstaubpartikelfilters (16), zunimmt;
- in Verbindung mit Anspruch 9, zumindest eine Zunge (28a, 28b, 28c, 28d) zu einem zur Anlage am Bremssattel (14) vorgesehenen Anlagebereich (44) kleineren Winkel (β₁, β₂, β₃, β₄) mit der Gehäuseumfangswand (26) einschließt als eine benachbarte Zunge (28a, 28b, 28c, 28d), die sich weiter von dem zur Anlage am Bremssattel (14) vorgesehenen Anlagebereich (44) des Bremsstaubpartikelfilters (16) entfernt befindet;
- in Verbindung mit Anspruch 9 und Anspruch 5, zumindest eine Zunge (28a, 28b, 28c, 28d) mehr und/oder größere Durchgangsausnehmungen aufweist als eine benachbarte Zunge (28a, 28b, 28c, 28d), die sich weiter von dem zur Anlage am Bremssattel (14) vorgesehenen Anlagebereich (44) des Bremsstaubpartikelfilters (16) entfernt befindet;
- in Verbindung mit Anspruch 9, das freie Ende (30a, 30b, 30c, 30d) zumindest einer Zunge (28a, 28b, 28c, 28d) weniger weit radial nach innen in den Innenraum des Gehäuses vorsteht als eine benachbarte Zunge (28a, 28b, 28c, 28d), die sich weiter von einem zur Anlage am Bremssattel (14) vorgesehenen Anlagebereich (44) des Bremsstaubpartikelfilters (16) entfernt befindet; und/oder
- in Verbindung mit Anspruch 9, die in den Gehäuseinnenraum (20) ragende Fläche zumindest einer Zunge (28a, 28b, 28c, 28d) kleiner ist als die in den Gehäuseinnenraum (20) ragende Fläche einer benachbarten Zunge (28a, 28b, 28c, 28d), die sich weiter von einem zur Anlage am Bremssattel (14) vorgesehenen Anlagebereich (44) des Bremsstaubpartikelfilters (16) entfernt befindet.

11. Bremsstaubpartikelfilter nach einem der vorherigen Ansprüche, bei dem der Bremsstaubpartikelfilter (16) zumindest eine Öffnung (46a, 46b) zum Austritt gefilterter Luft in der Gehäusewand (17, 19, 26), insbesondere in der Gehäuseumfangswand (26, 62, 64), aufweist, wobei der Bremsstaubpartikelfilter (16) vorzugsweise eine Mehrzahl an Öffnungen (46a, 46b) zum Austritt gefilterter Luft in der Gehäusewand (17, 19, 26), insbesondere in der Gehäuseumfangswand (26, 62, 64), aufweist.

12. Bremsstaubpartikelfilter nach einem der vorherigen Ansprüche, bei dem das Filtermedium (32) ein Metall, ein Metallfaservlies, Glas, Keramik und/oder einen hochtemperaturbeständigen Kunststoff, insbesondere Polyetheretherketon, aufweist, und vorzugsweise auch noch bei einer Temperatur von mehr als 600°C beständig ist.

13. Scheibenbremsenanordnung (10), mit einer Bremsscheibe (12), einem Bremssattel (14) und einem Bremsstaubpartikelfilter (16) nach einem der Ansprüche 1 bis 12.

14. Scheibenbremsenanordnung nach Anspruch 13, bei der der Bremsstaubpartikelfilter (16)
- in seiner Position relativ zu dem Bremssattel (14) ortsfest angeordnet ist und/oder am Bremssattel (14) befestigt ist; und/oder
- die Scheibenbremsenanordnung (10) ein Radlagergehäuse aufweist und der Bremsstaubpartikelfilter (16) in seiner Position relativ zu dem Radlagergehäuse ortsfest angeordnet ist und/oder am Radlagergehäuse befestigt ist; und/oder
- die Scheibenbremsenanordnung (10) einen Spritzschutz, insbesondere in Form eines Spritzschutzblechs, aufweist und
• der Bremsstaubpartikelfilter (16) in seiner Position relativ zu dem Spritzschutz ortsfest angeordnet ist;
• am Spritzschutz befestigt ist; und/oder
• in Verbindung mit Anspruch 12, ein erstes Gehäuseteil (58) in Form des Spritzschutzes ausgebildet ist.

15. Scheibenbremsenanordnung nach einem der Ansprüche 12 bis 14, bei der die nach innen ragende Zunge (28a, 28b, 28c, 28d) mit ihrem freien Ende (30a, 30b, 30c, 30d) zum Bremssattel (14) hin ausgerichtet ist, insbesondere mehrere Zungen (28a, 28b, 28c, 28d) mit ihren freien Enden (30a, 30b, 30c, 30d) zum Bremssattel (14) hin ausgerichtet sind, vorzugsweise alle Zungen (28a, 28b, 28c, 28d) mit ihren freien Enden (30a, 30b, 30c, 30d) zum Bremssattel (14) hin ausgerichtet sind.

## Claims

1. Brake dust particle filter (16) for a disk brake arrangement (10) having a brake disk (12) and a brake caliper (14), wherein the brake dust particle filter (16) is configured to capture particles generated during braking, and wherein the brake dust particle filter (16) comprises the following:
- A ring segment-shaped housing (18) for at least partially receiving the brake disk (12) in a housing interior space (20), wherein the housing (18) features two axially spaced housing side walls (17, 19) and a housing peripheral wall (26, 62, 64) extending radially outward in circumferential direction, and wherein the housing peripheral wall (26, 62, 64) is disposed or formed between the housing side walls (17, 19);
**characterized in that** the brake dust particle filter (16) additionally features:
- at least one tongue (28a, 28b, 28c, 28d) projecting inwardly in the housing interior space (20) from the housing peripheral wall (26, 62, 64) at least in sections with at least one radial component,
- wherein the tongue (28a, 28b, 28c, 28d) features a flat cross-sectional shape and at least one base surface facing the housing peripheral wall (26, 62, 64), a cover surface projecting into the housing interior space (20), and at least one side face, and
- at least one filter medium (32);
wherein the tongue (28a, 28b, 28c, 28d) supports the filter medium (32) and is covered at least on the at least one side face, in particular completely, by the filter medium (32).

2. Brake dust particle filter according to claim 1, wherein the tongue (28a, 28b, 28c, 28d) has a substantially rectangular cross-section, wherein a proportion of a wide side with respect to a narrow side of the rectangular cross-section is between 15 and 60, preferably between 20 and 40.

3. Brake dust particle filter according to claim 1 or 2,
- in which the tongue (28a, 28b, 28c, 28d) is disposed or formed on a housing wall (17, 19, 26, 62, 64), in particular on the housing peripheral wall (26, 62, 64), so that the filter medium (32) is connected indirectly or directly to the housing wall (17, 19, 26, 62, 64); and/or
- which features a filter element with a filter element support structure and the filter medium (32), wherein the filter element support structure features the tongue (28a, 28b, 28c, 28d) and the filter element is disposed, in particular reversibly replaceably, in the housing (18).

4. Brake dust particle filter according to one of the claims 1 to 3, wherein at least one further tongue (28f) is provided which extends into the housing interior space (20) from at least one housing side wall (17, 19), wherein preferably the tongue (28a, 28b, 28c, 28d) extending from the housing peripheral wall (26, 62, 64) and the tongue (28f) extending from the housing side wall form a continuous tongue which features an L-shaped or U-shaped basic form.

5. Brake dust particle filter according to one of the claims 1 to 4, in which the filter medium (32) is attached to the tongue (28a, 28b, 28c, 28d) and/or to the housing wall (17, 19, 26) or to the filter element support structure, wherein the filter medium preferably forms a fold (42a, 42b, 42c, 42d) into which the tongue (28a, 28b, 28c, 28d) at least partially projects.

6. Brake dust particle filter according to one of the preceding claims, in which the tongue (28a, 28b, 28c, 28d) features at least one passage recess covered by the filter medium (32), wherein the tongue (28a, 28b, 28c, 28d) preferably features a plurality of passage recesses covered by the filter medium (32).

7. Brake dust particle filter according to one of the preceding claims, in which the filter medium (32) is designed in the area of the tongue (28a, 28b, 28c, 28d) in the shape of a collecting pocket for particles, wherein the collecting pocket is closed at the bottom in the assembled state of the brake dust particle filter in order to prevent the particles from escaping due to the force of gravity acting on the particles.

8. Brake dust particle filter according to one of the preceding claims, in which a first filter layer is disposed between a second filter layer and the tongue (28a, 28b, 28c, 28d) and the second filter layer features a greater porosity than the first filter layer, wherein in particular
- the first filter layer is designed in the shape of a first area of the filter medium (32) and the second filter layer is designed in the shape of a second area of the filter medium (32); or
- the first filter layer is designed in the shape of the filter medium (32) and the second filter layer is designed in the shape of a further filter medium.

9. Brake dust particle filter according to one of the preceding claims, **characterized in that** the brake dust particle filter (16) features a plurality of tongues (28a, 28b, 28c, 28d) projecting inwards in the housing interior space (20) and which are disposed spaced apart in the circumferential direction, wherein the tongues (28a, 28b, 28c, 28d) support the filter medium (32) and are at least partially, in particular completely, covered by the filter medium (32), wherein preferably at least two tongues (28a, 28b, 28c, 28d) enclose a different angle (β₁, β₂, β₃, β₄) with the housing peripheral wall (26, 62, 64).

10. Brake dust particle filter according to one of the preceding claims, in which the brake dust particle filter (16) is designed in such a way that the filtering effect on the air flowing through the brake disk (12) in the circumferential direction of the housing (18) increases, in particular as
- the porosity of the filter medium (32) decreases in the circumferential direction of the housing (18), beginning in an abutment area (44) of the brake dust particle filter (16) intended for abutment against the brake caliper (14); in particular in combination with claim 9, the filter medium (32) features at a tongue (28a, 28b, 28c, 28d) a greater porosity than the filter medium (32) at the next adjacent tongue (28a, 28b, 28c, 28d) which is located further away from an abutment area (44) of the brake dust particle filter (16) intended for abutment against the brake caliper (14);
- the thickness of the filter medium (32) increases in the circumferential direction of the housing (18), starting in an abutment area (44) of the brake dust particle filter (16) intended for abutment against the brake caliper (14);
- in combination with claim 9, at least one tongue (28a, 28b, 28c, 28d) encloses a smaller angle (β₁, β₂, β₃, β₄) with the housing peripheral wall (26) to an abutment area (44) intended for abutment against the brake caliper (14) than an adjacent tongue (28a, 28b, 28c, 28d) which is located further away from the abutment area (44) of the brake dust particle filter (16) intended for abutment against the brake caliper (14);
- in combination with claim 9 and claim 5, at least one tongue (28a, 28b, 28c, 28d) features more and/or larger passage recesses than an adjacent tongue (28a, 28b, 28c, 28d) located further away from the abutment area (44) of the brake dust particle filter (16) intended for abutment against the brake caliper (14);
- in combination with claim 9, the free end (30a, 30b, 30c, 30d) of at least one tongue (28a, 28b, 28c, 28d) projects radially inward into the interior space of the housing less than an adjacent tongue (28a, 28b, 28c, 28d) located further away from an abutment area (44) of the brake dust particulate filter (16) intended for abutment against the brake caliper (14); and/or
- in combination with claim 9, the area of at least one tongue (28a, 28b, 28c, 28d) projects into the housing interior space (20) is smaller than the area of an adjacent tongue (28a, 28b, 28c, 28d) projecting into the housing interior space (20), which tongue is located further away from an abutment area (44) of the brake dust particle filter (16) intended for abutment against the brake caliper (14).

11. Brake dust particle filter according to one of the preceding claims, in which the brake dust particle filter (16) features at least one opening (46a, 46b) for the outlet of filtered air in the housing wall (17, 19, 26), in particular in the housing peripheral wall (26, 62, 64), wherein the brake dust particle filter (16) preferably features a plurality of openings (46a, 46b) for the outlet of filtered air in the housing wall (17, 19, 26), in particular in the housing peripheral wall (26, 62, 64).

12. Brake dust particle filter according to one of the preceding claims, in which the filter medium (32) features a metal, a metal fiber non-woven fabric, glass, ceramic and/or a high-temperature resistant plastic material, in particular polyetheretherketone, and is preferably still resistant at a temperature of more than 600°C.

13. Disk brake arrangement (10), with a brake disk (12), a brake caliper (14), and a brake dust particle filter (16) according to one of the claims 1 to 12.

14. Disk brake arrangement according to claim 13, in which the brake dust particle filter (16) is
- stationary in its position relative to the brake caliper (14) and/or is attached to the brake caliper (14); and/or
- the disk brake arrangement (10) features a wheel bearing housing and the brake dust particle filter (16) is stationary in its position relative to the wheel bearing housing and/or is attached to the wheel bearing housing; and/or
- the disk brake arrangement (10) features a splash guard, in particular in the shape of a splash guard plate, and
• the brake dust particle filter (16) is stationary in its position relative to the splash guard;
• is attached to the splash guard; and/or
• in combination with claim 12, a first housing component (58) is formed in the shape of the splash guard.

15. Disk brake arrangement according to one of the claims 12 to 14, in which the inwardly projecting tongue (28a, 28b, 28c, 28d) is aligned with its free end (30a, 30b, 30c, 30d) towards the brake caliper (14), in particular several tongues (28a, 28b, 28c, 28d) are aligned with their free ends (30a, 30b, 30c, 30d) towards the brake caliper (14), preferably all tongues (28a, 28b, 28c, 28d) are aligned with their free ends (30a, 30b, 30c, 30d) towards the brake caliper (14).

## Revendications

1. Filtre à particules de poussière de frein (16) pour un ensemble de frein à disque (10) ayant un disque de frein (12) et un étrier de frein (14), dans lequel le filtre à particules de poussière de frein (16) est conçu pour collecter des particules occasionnées lors du freinage et dans lequel le filtre à particules de poussière de frein (16) présente ce qui suit :
- Un boîtier en forme de segment annulaire (18) pour loger au moins partiellement le disque de frein (12) dans un espace intérieur du boîtier (20), dans lequel le boîtier (18) présente deux parois latérales du boîtier (17, 19) espacées axialement l'un de l'autre et une paroi périphérique du boîtier (26, 62, 64) s'étendant radialement vers l'extérieur en sens circonférentiel et dans lequel la paroi périphérique du boîtier (26, 62, 64) est disposée ou conçue entre les parois latérales du boîtier (17, 19) ;
**caractérisé en ce que** le filtre à particules de poussière de frein (16) présente en outre :
- au moins une languette (28a, 28b, 28c, 28d) faisant saillie vers l'intérieur dans l'intérieur du boîtier (20) depuis la paroi périphérique du boîtier (26, 62, 64) au moins dans certaines sections avec au moins une composante radiale,
- dans lequel la languette (28a, 28b, 28c, 28d) présente une forme plate en coupe transversale et a au moins une surface de base faisant face à la paroi périphérique du boîtier (26, 62, 64), une surface de couverture faisant saillie dans l'intérieur du boîtier (20), et au moins une surface latérale, et
- au moins un milieu filtrant (32) ;
dans lequel la languette (28a, 28b, 28c, 28d) supporte le milieu filtrant (32) et est recouverte au moins sur la surface latérale, au moins au nombre d'une, notamment complètement, du milieu filtrant (32).

2. Filtre à particules de poussière de frein selon la revendication 1, dans lequel la languette (28a, 28b, 28c, 28d) a une section transversale sensiblement rectangulaire, dans lequel un rapport d'un côté large par rapport à un côté étroit de la section transversale rectangulaire est compris entre 15 et 60, de préférence entre 20 et 40.

3. Filtre à particules de poussière de frein selon la revendication 1 ou 2,
- dans lequel la languette (28a, 28b, 28c, 28d) est disposée ou conçue sur une paroi du boîtier (17, 19, 26, 62, 64), notamment sur la paroi périphérique du boîtier (26, 62, 64), de sorte que le milieu filtrant (32) est relié indirectement ou directement à la paroi du boîtier (17, 19, 26, 62, 64) ;
et/ou
- qui présente un élément filtrant avec une structure de support d'élément filtrant et le milieu filtrant (32), dans lequel la structure de support d'élément filtrant présente la languette (28a, 28b, 28c, 28d) et l'élément filtrant est disposé, notamment réversiblement échangeable, dans le boîtier (18).

4. Filtre à particules de poussière de frein selon l'une quelconque des revendications 1 à 3, dans lequel au moins une autre languette (28f) est prévue qui s'étend dans l'intérieur du boîtier (20) à partir d'au moins une paroi latérale du boîtier (17, 19), dans lequel de préférence la languette (28a, 28b, 28c, 28d) s'étendant à partir de la paroi périphérique du boîtier (26, 62, 64) et la languette (28f) s'étendant à partir de la paroi latérale du boîtier forment une languette continue qui présente une forme de base en forme de L ou de U.

5. Filtre à particules de poussière de frein selon l'une quelconque des revendications 1 à 4, où le milieu filtrant (32) est fixé à la languette (28a, 28b, 28c, 28d) et/ou à la paroi du boîtier (17, 19, 26) ou à la structure de support d'élément filtrant, dans lequel le milieu filtrant forme de préférence un pli (42a, 42b, 42c, 42d) où la languette (28a, 28b, 28c, 28d) fait au moins partiellement saillie.

6. Filtre à particules de poussière de frein selon l'une quelconque des revendications précédentes, où la languette (28a, 28b, 28c, 28d) présente au moins un évidement traversant recouvert par le milieu filtrant (32), dans lequel la languette (28a, 28b, 28c, 28d) comprend de préférence une pluralité d'évidements traversants recouverts par le milieu filtrant (32).

7. Filtre à particules de poussière de frein selon l'une quelconque des revendications précédentes, où le milieu filtrant (32) est réalisé, dans la zone de la languette (28a, 28b, 28c, 28d), sous la forme d'une pochette de collecte pour les particules, dans lequel la pochette de collecte est fermée vers le bas à l'état monté du filtre à particules de poussière de frein afin d'empêcher les particules de s'échapper en raison de la force de gravité agissant sur les particules.

8. Filtre à particules de poussière de frein selon l'une quelconque des revendications précédentes, où une première couche filtrante est disposée entre une seconde couche filtrante et la languette (28a, 28b, 28c, 28d) et la seconde couche filtrante présente une porosité supérieure à celle de la première couche filtrante, dans lequel notamment
- la première couche filtrante est réalisée sous la forme d'une première zone du milieu filtrant (32) et la seconde couche filtrante est réalisée sous la forme d'une seconde zone du milieu filtrant (32) ; ou
- la première couche filtrante est réalisée sous la forme du milieu filtrant (32) et la seconde couche filtrante est réalisée sous la forme d'un autre milieu filtrant.

9. Filtre à particules de poussière de frein selon l'une quelconque des revendications précédentes, **caractérisé en ce que** le filtre à particules de poussière de frein (16) présente une pluralité de languettes (28a, 28b, 28c, 28d) qui font saillie vers l'espace intérieur du boîtier (20) et qui sont disposées à distance les unes des autres dans la direction circonférentielle, dans lequel les languettes (28a, 28b, 28c, 28d) supportent le milieu filtrant (32) et sont au moins partiellement, notamment complètement, recouvertes du milieu filtrant (32), dans lequel de préférence au moins deux languettes (28a, 28b, 28c, 28d) enferment un angle différent (β₁, β₂, β₃, β₄) avec la paroi périphérique du boîtier (26, 62, 64).

10. Filtre à particules de poussière de frein selon l'une quelconque des revendications précédentes, où le filtre à particules de poussière de frein (16) est réalisé de telle sorte que l'effet filtrant sur l'air se déplaçant à travers le disque de frein (12) dans la direction circonférentielle du boîtier (18) augmente, notamment
- la porosité du milieu filtrant (32) diminue dans la direction circonférentielle du boîtier (18), en commençant dans une zone d'appui (44) du filtre à particules de poussière de frein (16) destinée à venir en butée contre l'étrier de frein (14) ; notamment en combinaison avec la revendication 9, le milieu filtrant (32) au niveau d'une languette (28a, 28b, 28c, 28d) présente une porosité plus grande que le milieu filtrant (32) au niveau de la languette adjacente suivante (28a, 28b, 28c, 28d) qui est située plus loin d'une zone d'appui (44) du filtre de particules de poussière de frein (16) destinée à venir en butée contre l'étrier de frein (14) ;
- l'épaisseur du milieu filtrant (32) augmente en direction circonférentielle du boîtier (18), en commençant dans une zone d'appui (44) du filtre à particules de poussière de frein (16) destinée à venir en butée contre l'étrier de frein (14) ;
- en combinaison avec la revendication 9, au moins une languette (28a, 28b, 28c, 28d) forme un angle plus petit (β₁, β₂, β₃, β₄) avec la paroi périphérique du boîtier (26) vers une zone d'appui (44) destinée à venir en butée contre l'étrier de frein (14) qu'une languette adjacente (28a, 28b, 28c, 28d) qui est située plus loin de la zone d'appui (44) du filtre à particules de poussière de frein (16) destinée à venir en butée contre l'étrier de frein (14) ;
- en combinaison avec la revendication 9 et la revendication 5, au moins une languette (28a, 28b, 28c, 28d) présente des évidements traversants plus nombreux et/ou plus grands qu'une languette adjacente (28a, 28b, 28c, 28d) qui est située plus loin de la zone d'appui (44) du filtre à particules de poussière de frein (16) destinée à venir en butée contre l'étrier de frein (14) ;
- en combinaison avec la revendication 9, l'extrémité libre (30a, 30b, 30c, 30d) d'au moins une languette (28a, 28b, 28c, 28d) fait saillie radialement vers l'espace intérieur du boîtier moins qu'une languette adjacente (28a, 28b, 28c, 28d) située plus loin d'une zone d'appui (44) du filtre à particules de poussière de frein (16) destinée à venir en butée contre l'étrier de frein (14) ; et/ou
- en combinaison avec la revendication 9, la zone d'au moins une languette (28a, 28b, 28c, 28d) faisant saillie dans l'espace intérieur du boîtier (20) est plus petite que la zone d'une languette adjacente (28a, 28b, 28c, 28d) faisant saillie dans l'espace intérieur du boîtier (20), laquelle languette est située plus loin d'une zone d'appui (44) du filtre à particules de poussière de frein (16) destinée à venir en butée contre l'étrier de frein (14).

11. Filtre à particules de poussière de frein selon l'une des revendications précédentes, où le filtre à particules de poussière de frein (16) présente au moins une ouverture (46a, 46b) pour la sortie de l'air filtré dans la paroi du boîtier (17, 19, 26), notamment dans la paroi périphérique du boîtier (26, 62, 64), dans lequel le filtre à particules de poussière de frein (16) présente de préférence une pluralité d'ouvertures (46a, 46b) pour la sortie de l'air filtré dans la paroi du boîtier (17, 19, 26), notamment dans la paroi périphérique du boîtier (26, 62, 64).

12. Filtre à particules de poussière de frein selon l'une quelconque des revendications précédentes, où le milieu filtrant (32) présente un métal, un mat de fibres métalliques, du verre, de la céramique et/ou une matière plastique résistant aux hautes températures, notamment la polyétheréthercétone, et est de préférence encore résistante à une température supérieure à 600°C.

13. Ensemble de frein à disque (10), avec un disque de frein (12), un étrier de frein (14) et un filtre à particules de poussière de frein (16) selon l'une quelconque des revendications 1 à 12.

14. Ensemble de frein à disque selon la revendication 13, où le filtre à particules de poussière de frein (16) est
- stationnaire dans sa position par rapport à l'étrier de frein (14) et/ou est fixé à l'étrier de frein (14) ; et/ou
- l'ensemble de frein à disque (10) présente un carter de roulement de roue et le filtre à particules de poussière de frein (16) est stationnaire dans sa position par rapport au carter de roulement de roue et/ou est fixé au carter de roulement de roue; et/ou
- l'ensemble de frein à disque (10) présente une protection contre les éclaboussures, notamment sous la forme d'une plaque de protection contre les éclaboussures, et
• le filtre à particules de poussière de frein (16) est stationnaire dans sa position par rapport à la protection contre les éclaboussures ;
• est fixé à la protection contre les éclaboussures ; et/ou
• en combinaison avec la revendication 12, un premier composant de boîtier (58) est réalisé sous la forme de la protection contre les éclaboussures.

15. Ensemble de frein à disque selon l'une quelconque des revendications 12 à 14, où la languette (28a, 28b, 28c, 28d) faisant saillie vers l'intérieur est orientée avec son extrémité libre (30a, 30b, 30c, 30d) vers l'étrier de frein (14), notamment plusieurs languettes (28a, 28b, 28c, 28d) sont alignées avec leurs extrémités libres (30a, 30b, 30c, 30d) vers l'étrier de frein (14), de préférence toutes les languettes (28a, 28b, 28c, 28d) sont alignées avec leurs extrémités libres (30a, 30b, 30c, 30d) vers l'étrier de frein (14).
